# EUROPEAN PATENT APPLICATION

(11) **EP 4 075 617 A1**
(43) Date of publication of application: **19.10.2022**
(21) Application number: 21168652.2
(22) Date of filing: 15.04.2021
(51) Int. Cl.: H02G 15/007, H02G 15/013, H02G 15/04, H02G 3/32, H02G 1/14, H02G 3/06, F16L 3/10, F16L 3/12, H01R 13/58

(54) **HOLDING APPARATUS AND A METHOD FOR HOLDING**

(71) Applicant: HENSOLDT Sensors GmbH, 82024 Taufkirchen (DE)
(72) Inventor: BÄUERLE, Alexander, 98129 Langenau (DE); GRAF, Constantin, 89233 Neu-Ulm (DE)
(74) Representative: LifeTech IP Spies & Behrndt Patentanwälte PartG mbB

(57) **Abstract**

An apparatus for holding a cable (50) is disclosed. The cable (50) includes a cladding (52), an electromagnetic shield (54), and at least one wire (56). The holding apparatus comprises: a base portion (110), a clamp portion (120), and a shield support portion (130). The clamp portion (120) is configured to be mounted on the base portion (110) and to fixedly hold the cable (50) by clamping the cladding (52) of the cable (50) to provide a strain relief. The shield support portion (130) is configured to be mounted on the base portion (110) and to contact, when mounted on the base portion (110), the shield (54) of the cable (50). The shield support portion (130) and the base portion (110), when holding the cable (50), are mounted on the base portion (110) next to each other and form a cavity (133) around the cable (50) to allow potting material (60) to fill the cavity (133) to provide a liquid-tight sealing.

## Description

The present invention relates to an apparatus for holding a cable and a method for providing the holding and, in particular, to a liquid-tight shield support with a cable strain relief.

### BACKGROUND

In many areas of technology, cables have to be carried through walls or housings in a liquid-tight way while at the same time achieve an EMC (electromagnetic compatibility) shielding and a strain relief. The shielded cables shall thus be secured against strain while not affecting the liquid-tight sealing and connecting the shield to a housing or another ground contact. At the same time this liquid-tight connection assembly shall be established in a simple and secure way.

EP 1 673 841 B1 discloses a conventional holding apparatus for fixedly holding a cable, wherein an annular spring is in contact with a circumferential groove to provide a shield contact. However, this conventional holding apparatus has many components which thus renders the assembly more difficult. In addition, this conventional holding apparatus provides merely a wall duct that cannot be sealed against liquids.

Therefore, there is a demand for an alternative holding apparatus which provides a liquid-tight connection and at the same time provides an EMC shield support.

### SUMMARY OF THE INVENTION

At least some of the above-mentioned problems are solved by a holding apparatus according to claim 1 and a method for providing a holding of a cable according to claim 9. The dependent claims refer to further advantageous realisations of the claimed subject matter.

The present invention relates to an apparatus for holding a cable. The cable includes a cladding, an electromagnetic shield, and at least one wire. The holding apparatus comprises: a base portion, a clamp portion, and a shield support portion. The clamp portion is configured to be mounted on the base portion and to fixedly hold the cable by clamping the cladding of the cable to provide a strain relief. The shield support portion is configured to be mounted on the base portion and to contact, when mounted on the base portion, the shield of the cable. The shield support portion and the base portion, when holding the cable, are mounted on the base portion next to each other and form a cavity around the cable to allow potting material to fill the cavity to provide a liquid-tight sealing.

It is understood that the invention shall not be restricted on particular cables, whether it is cable for electric signals, supply lines or for optical data transmissions. Therefore, the wire shall also include optical fibres. Furthermore, the base portion may be secured to a fixed bearing to bear the strain or force acting on the cable.

Optionally, the shield support portion comprises an injection hole for injecting the potting material through the shield support portion into the cavity. The injection hole may have a circular cross-section along the flowing direction and may have a maximal extension of less than 10 mm or less than 5 mm.

Optionally, the base portion, the clamp portion, and the shield support portion each includes a half-cylindrical recess for receiving (part of) the cable (e.g. when mounting the shield support portion and the clamp portion onto the base portion).

Optionally, the base portion and the shield support portion includes in their half cylindrical recesses protrusions configured to contact the shield of the cable. This contact may put the shield on electrical ground.

Optionally, the protrusions in the base portion and in the shield support portion are spaced from each other and/or may have a tapered edge to define a groove to allow potting material to flow from the injection hole to a portion of the cable, where the wires (or fibers) are exposed.

Optionally, the base portion and the clamp portion include in their half cylindrical recesses at least one circumferential projection to clamp the cable (or its cladding). This clamping may be achieved upon mounting the clamp portion on the base portion and provides thereby the strain relief.

Optionally, the clamp portion and the shield support portion are configured to be mounted onto the base portion by (separate) screw connections.

Optionally, the cavity is defined by a circumferential ring-shaped indentation which is in communication with the injection hole to allow the potting material, when injected through the injection hole, to form a ring-shaped sealing around the cable.

Optionally, the potting material is electrically conductive, which supports a reliable electrical connection to the electromagnetic shield of the cable. The potting material may also include a resin or a plastic material which may or may not be mixed with an electric-conductive component.

Optionally, at least one of the portions of the apparatus is additively manufactured (3D-printing). For example, the base portion and/or the clamp portion and/or the shield support portion or part thereof can be formed by an additive manufacturing process. There are various possibilities of the additive manufacturing including: inkjet additive manufacturing, selective laser sintering, fused filament fabrication, stereolithography etc. It is understood that the microscopic structure of the additively manufacture portion will depend on the utilized 3D-printing and a person skilled in the art can identify the used manufacturing method.

Embodiments relate also to a method for providing a holding of a cable. The method comprises:
- providing a base portion with the cable;
- mounting the clamp portion on the base portion with the cable therebetween to clamp the cable and to provide a strain relief;
- mounting a shield support portion on the base portion to contact the shield (e.g. at a portion of the cable with an exposed shield arranged therebetween), wherein a cavity around the cable is formed after mounting the clamp portion and/or the shield support portion; and
- filling potting material into the cavity to provide a liquid-tight sealing.

The shield support portion and the base portion are mounted on the base portion next to each other. It is understood that the list of steps above does not indicate an order or orientation. In addition, the base portion may also be part of bearing may be secured to a bearing that is able to bear the strain.

In contrast to conventional assemblies, embodiments provide a cable connection that is liquid-tight combined with a strain relief. Embodiments overcome deficiencies of the conventional holding devices by providing half shells for the base portion, the clamp portion and the support portion to clamp the cable and to contact the shield while providing a potting channel for a liquid-tight sealing.

### BRIEF DESCRIPTION OF THE DRAWINGS

Various embodiments of the present invention will be described in the following by way of examples only, and with respect to the accompanying drawings, in which:
- Figs. 1A, 1B: depict perspective views on a holding apparatus according to an embodiment of the present invention.
- Fig. 2A: shows a perspective view on the cable to be held by the holding apparatus.
- Fig. 2B: shows a perspective view on the holding apparatus with an inserted cable.
- Fig. 3A: shows the shield support portion and the clamp portion when viewed from the direction of the base portion.
- Figs. 3B, 3C: show views on the base portion.
- Figs. 4A, 4B: show cross-sectional views through the holding apparatus with a held cable.
- Fig. 5: depicts a schematic flow chart for a method of providing a cable holding according to an embodiment.

### DETAILED DESCRIPTION

Various examples will now be described more fully with reference to the accompanying drawings, in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealised or overly formal sense unless expressly so defined herein.

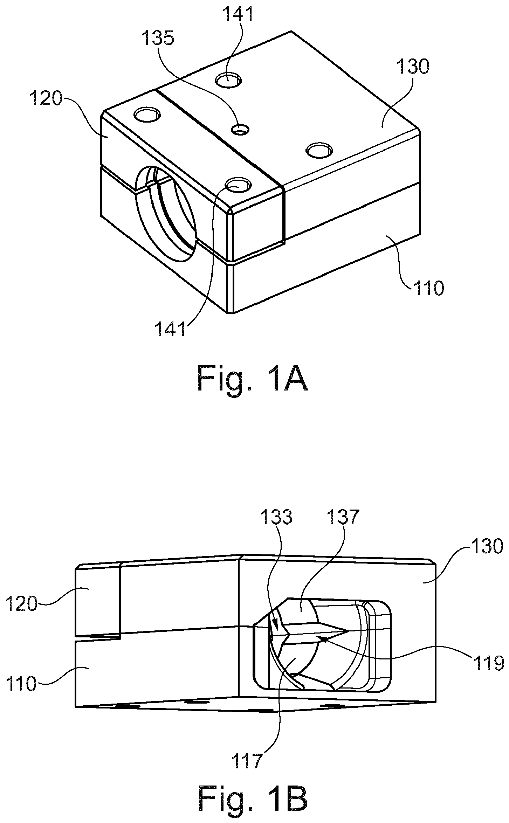

**Figs. 1A** and **Fig. 1B** depict perspective views on a holding apparatus according to an embodiment of the present invention. The holding apparatus is configured to hold a cable (not shown in Figs. 1A, 1B) and comprises a base portion 110, a clamp portion 120 for clamping the cable, and a shield support portion 130 for contacting an EMC shield of the cable. The shield support portion 130 includes an injection hole 135 for injecting potting material to provide a liquid-tight connection.

It is understood that the cable and/or the potting material do not necessarily are part of embodiments. Rather, various different cables and/or potting materials may be deployed (e.g. resin, thermoplastic materials, materials for injection molding, electric-conductive materials).

**Fig. 1A** further shows a plurality of connection openings 141 for providing a screw connection between the clamp portion 120 and the base portion 110, and between the shield support portion 130 and the base portion 110. **Fig. 1B** depicts a perspective view from the opposite direction (when compared to Fig. 1A) and further depicts first protrusions 117 extending radially inwardly from the base portion 110 and second protrusions 137 extending radially inward from the shield support portion 130. In addition, a groove 119 is formed between the first and second protrusions 117, 137 and is connected with a cavity 133 formed in the holding apparatus to allow potting material, when inserted into the injection hole 135, to spread in the interior cavity 133, 119 when the cable is inserted.

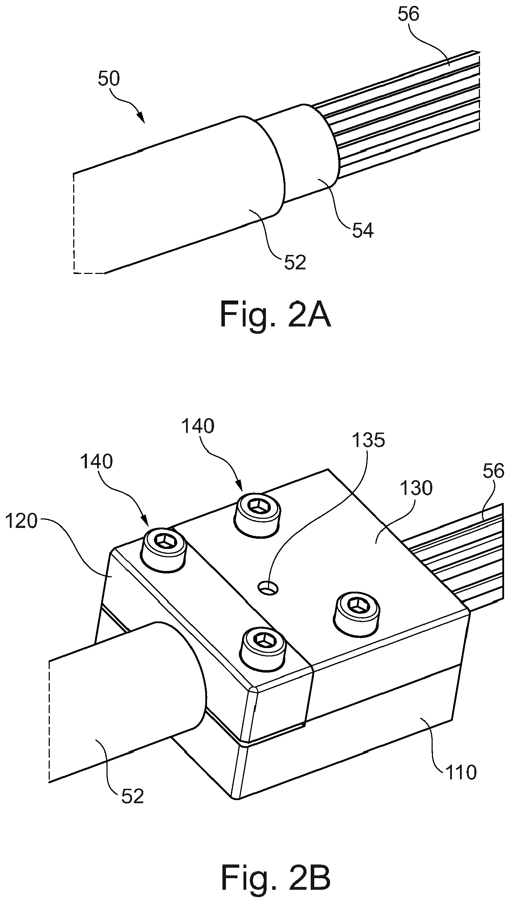

**Fig. 2A** shows a perspective view on the cable 50 that includes a plurality of wires 56, an electromagnetic shield 54 and a cladding 52 providing an isolation of the cable 50.

**Fig. 2B** shows a perspective view on the holding apparatus with an inserted cable 50, wherein the clamp portion 120 is mounted on the base portion 110 and fixedly holds the cable 50 by clamping the cladding 52 of the cable 50. This provides a strain relief, e.g. on the wires 56 that projects on the right-hand-side of the apparatus. The shield support portion 130 is likewise mounted on the base portion 110 and contacts the shield 54 of the cable 50 (not visible in Fig. 2B). As it is apparent from Fig. 2B, the shield support portion 130 and the clamp portion 120 are mounted on the base portion 110 next to each other on one side.

Moreover, the injection hole 135 of shield support portion 130 is in communication with the cavity 133 (not visible in Fig. 2B) that extends around the cable 50 to allow potting material to fill the cavity 133 and to provide a liquid-tight sealing. The clamp portion 120 and the shield support portion 130 are secured by screw connections 140 to the base portion 110. It is understood that other connections may also be utilized (e.g. using clamps, rivets).

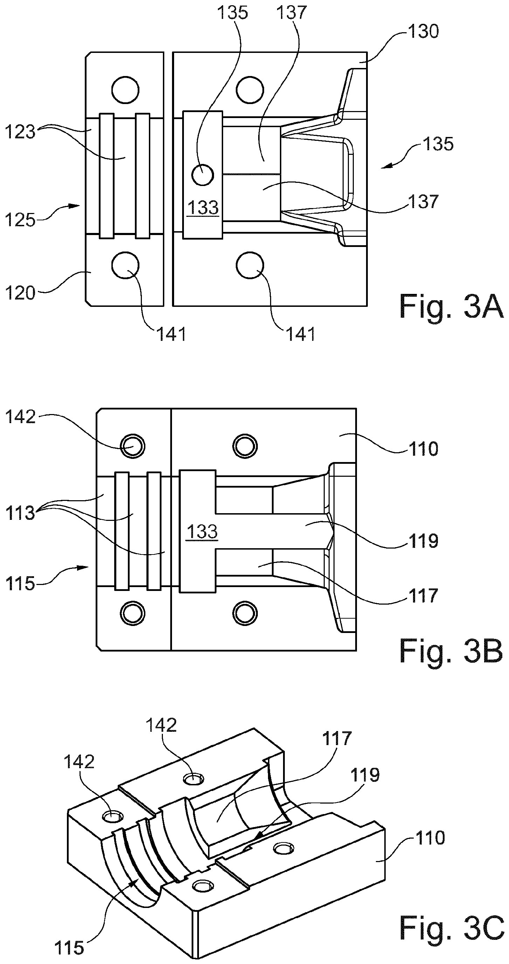

**Fig. 3A** depicts the shield support portion 130 and the clamp portion 120 when viewed from the direction of the base portion 110 (see Fig. 1A). The clamp portion 120 includes a half-cylindrical recess 125 with three circumferential projections 123 for clamping the cable cladding 52. The shield support portion 130 includes another half-cylindrical recess 135 with protrusions 137 for contacting the cable shield 54, the injection hole 135 is formed in communication with the cavity 133 representing a circumferential indentation in the shield support portion 130.

**Fig. 3B** depicts a view on the base portion 110 from the direction of the clamp portion 120 or the shield support portion 130 (see Fig. 1A), and **Fig. 3C** shows a perspective view on the base portion 110. The base portion 110 includes a half-cylindrical recess 115 with again three circumferential projections 113 for clamping the cable cladding 52 and with the protrusions 117 to contact the cable shield 54. Again, an indentation is formed to build the cavity 133 after assembling. Furthermore, the grooves 119 are visible between the protrusions 117 to allow potting material to flow from the axial position of the injection hole 135 to the region where the cable 50 has neither a cladding 52 nor the shield 54 (the right-hand-side in Fig 2B). The groove 119 can be formed by tapered edges of the protrusions 117, 137 or by arranging the protrusions 117, 137 spaced from each other (in the angular direction).

Finally, a plurality of openings 141 are depicted which are configured to receive bolts or screws to provide a screw connection between the clamping portion 120 and the base portion 110 and between the shield support portion 130 and the base portion 110. Accordingly, the base portion 110 includes threaded holes 142 to receive the bolt/screw for tightly securing the clamp portion 120 and the shield support portion 130.

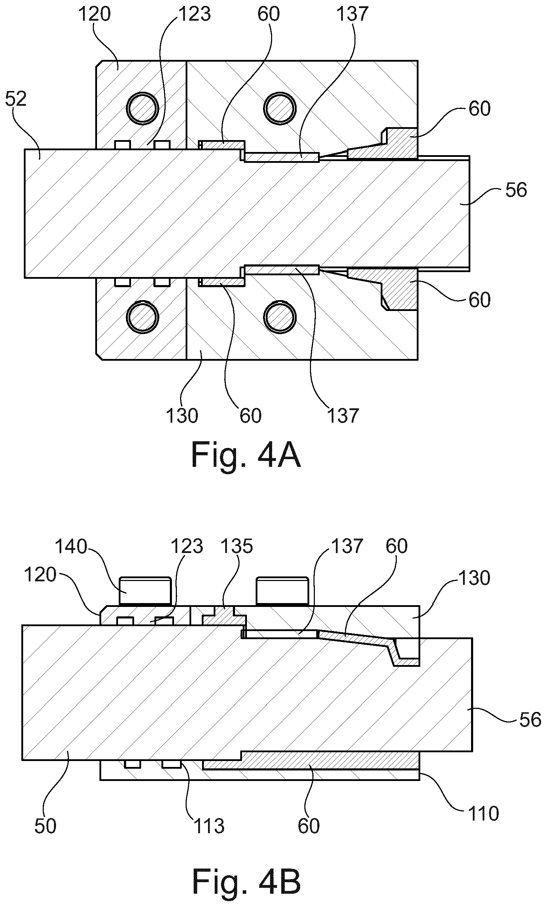

**Fig. 4A** shows a horizontal cross-section view (through the holding apparatus of Fig. 2B) onto the clamping portion 120 and the shield support portion 130 along the plane between the base portion 110 and the shield support portion 130. In this view, the wires 56 of the held cable 50 are on the right-hand side and the cladding 52 is on the left-hand side. In addition, the protrusions 137 are shown to contact the shield 54. Furthermore, potting material 60 is inserted through the injection hole 135 (not shown in Fig. 4A) which flows through the cavity 133 to cover the cable 50 from all directions to provide a liquid-tight connection. The clamping portion 120 is shown with the circumferential projections 123 to provide a secure clamping between the cladding 52 and the holding apparatus.

**Fig. 4B** shows a cross-sectional view through the cable 50 and the injection hole 135 depicting the wires 56 on the right-hand side and the cladding 52 on the left-hand side. Furthermore, the protrusions 137 of the shield support portion 130 are shown to contact the shield 54. Again, potting material 60 is injected through the injection hole 135 to provide the liquid-tight connection by extending circumferentially around the cable 50 and extending towards the exposed wires 56.

The clamping portion 120 and the shield support portion 130 are secured to the base portion 110 using the exemplary screw connection 140. The secure clamping is provided by the projections 113 of the base portion 110 and by the projection 123 of the clamp portion 120 to achieve a strain relief on the cable 50.

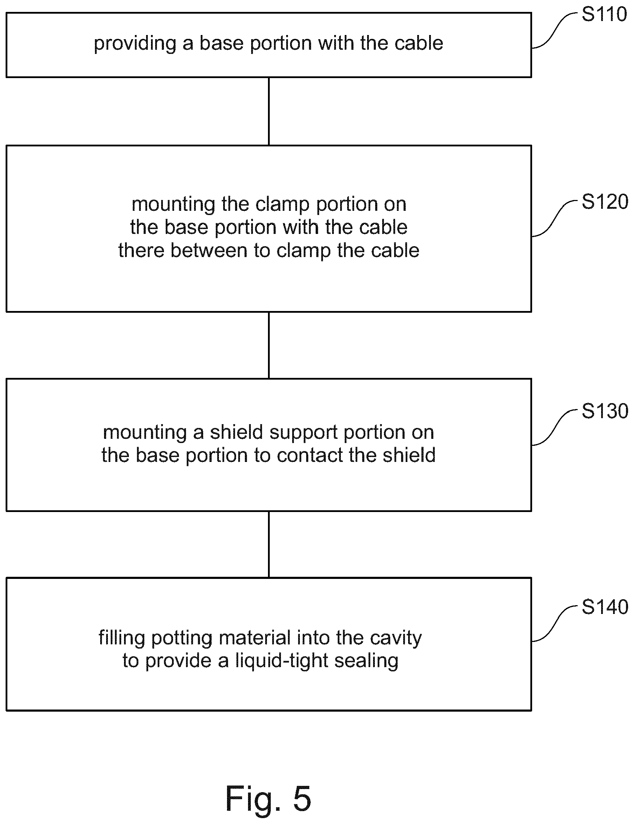

**Fig. 5** depict a schematic flow chart for a method of providing a holding of a cable. The method comprises:
- providing S110 a base portion 110 with the cable 50;
- mounting S120 the clamp portion 120 on the base portion 110 with the cable 50 therebetween to clamp the cable 50 and to provide a strain relief;
- mounting S130 a shield support portion 130 on the base portion 110, wherein an exposed portion the shield 54 of the cable 50 is arranged therebetween to contact the shield 54; and
- filling S140 potting material 60 into the cavity 133 to provide a liquid-tight sealing.

It is understood that all functions described before in conjunction with the holding apparatus can be implemented as further method steps according to further embodiments. In addition, the potting material 60 may be pressed with a predetermined pressures through the injection hole 135 to fill completely the cavity 133 (e.g. until an excess of potting material is visible at the exposed wires 56).

Advantages of embodiments relate to the integration of the shield support and strain relief in a compact, liquid-tight and small housing. The holding apparatus may be secured to a fixed bearing and/or a housing may extend around the holding apparatus, wherein the strain relief is provided by the holding apparatus secured to the bearing. Thus, the exerted strain cannot affect the sealing provided by the holding apparatus.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realised in other embodiments. Such combinations are covered by the disclosure herein unless it is stated that a specific combination is not intended.

### List of reference signs

- 50: cable
- 52: cable cladding
- 54: cable EMC shield (electromagnetic compatibility shield)
- 56: wire(s), fibre(s)
- 60: potting material
- 110: base portion
- 113, 123: circumferential projection(s)
- 115,125,135: half-cylindrical recess(es)
- 117,137: protrusion(s)
- 119: groove(s)
- 120: clamp portion
- 130: shield support portion
- 133: cavity
- 135: injection hole
- 140: screw connection
- 141: connection openings
- 142: threaded holes

## Claims

1. An apparatus for holding a cable (50), the cable (50) including a cladding (52), an electromagnetic shield (54), and at least one wire (56), the holding apparatus comprising:
a base portion (110);
a clamp portion (120) configured to be mounted on the base portion (110) and fixedly holding the cable (50) by clamping the cladding (52) of the cable (50) to provide a strain relief; and
a shield support portion (130) configured to be mounted on the base portion (110) and to contact, when mounted on the base portion (110), the shield (54) of the cable (50),
wherein, when holding the cable (50), the shield support portion (130) and the base portion (110) are mounted on the base portion (110) next to each other and form a cavity (133) around the cable (50) to allow potting material (60) to fill the cavity (133) to provide a liquid-tight sealing.

2. The apparatus according to claim 1, wherein the shield support portion (130) comprises an injection hole (135) for injecting the potting material (60) through the shield support portion (130) into the cavity (133).

3. The apparatus according to claim 1 or claim 2, wherein the base portion (110), the clamp portion (120) and the shield support portion (130) each includes a half-cylindrical recess (115, 125, 135) for receiving the cable (50).

4. The apparatus according to claim 3, wherein the base portion (110) and the shield support portion (130) includes in their half cylindrical recesses (115, 135) protrusions (117, 137) configured to contact the shield (54) of the cable (50).

5. The apparatus according to claim 4, wherein the protrusions (117, 137) in the base portion (110) and in the shield support portion (120) are spaced from each other or having a tapered edge to define a groove (119) to allow potting material (60) to flow from the injection hole (135) to a portion of the cable (50), where the wires (56) are exposed.

6. The apparatus according to one of claims 3 to 5, wherein the base portion (110) and the clamp portion (120) include in their half cylindrical recesses (115, 125) at least one circumferential projection (113, 123) to clamp the cable (50).

7. The apparatus according to one of the preceding claims, wherein the clamp portion (120) and the shield support portion (130) are configured to be mounted onto the base portion (110) by screw connections (140).

8. The apparatus according to one of the preceding claims, wherein the cavity (133) is defined by a circumferential ring-shaped indentation which is in communication with the injection hole (135) to allow the potting material (60), when injected through the injection hole (135), to form a ring-shaped sealing around the cable (50).

9. The apparatus according to one of the preceding claims, wherein at least one of its portions (110, 120, 130) is additively manufactured.

10. A method for providing a holding of a cable (50), the cable (50) including a cladding (52), an electromagnetic shield (54), and at least one wire (56), the method comprising:
providing (S110) a base portion (110) with the cable (50);
mounting (S120) the clamp portion (120) on the base portion (110) with the cable (50) therebetween to clamp the cable (50) to provide a strain relief;
mounting (S130) a shield support portion (130) on the base portion (110) to contact the shield (54), wherein a portion of the of the cable (50) with an exposed shield (54) is arranged therebetween, and wherein the shield support portion (130) and the base portion (110) are mounted on the base portion (110) next to each other and form a cavity (133) around the cable (50); and
filling (S1₄0) potting material (60) into the cavity (133) to provide a liquid-tight sealing.
